# EUROPEAN PATENT SPECIFICATION

(11) **EP 3 399 690 B1**
(45) Date of publication and mention of the grant of the patent: **25.11.2020**
(21) Application number: 17169796.4
(22) Date of filing: 05.05.2017
(51) Int. Cl.: H04L 5/14

(54) **SYNCHRONIZED FULL-DUPLEX COMMUNICATION**
SYNCHRONISIERTE VOLLDUPLEXKOMMUNIKATION
COMMUNICATION SYNCHRONISÉE EN DUPLEX INTÉGRAL

(43) Date of publication of application: 07.11.2018
(73) Proprietor: Nokia Solutions and Networks Oy, 02610 Espoo (FI)
(72) Inventor: Deburchgraeve, Wouter, 2018 Antwerpen (BE)
(74) Representative: IP HILLS NV

(56) References cited:
- US-A- 4 569 042
- US-A1- 2007 115 817

## Description

### Technical Field

The present invention generally relates, amongst others, to a full-duplex communication system. Full-duplex refers to the fact that the communication system is capable to simultaneously transmit and receive communication signals to and from a remote communication system over a transmission medium. Therefore, a full-duplex communication system comprises both a downstream and upstream processing chain.

### Background

In most full-duplex communication standards, synchronization between the upstream and downstream processing chains or pipelines is required. For example, in DSL communication, echo cancellation is performed in the upstream processing chain which requires information on the previously transmitted symbols responsible for the echo. Moreover, to correctly perform the echo cancellation, the transmission and reception of the respective symbols must also be synchronized, for example on the symbol boundaries.

One way to achieve synchronization is by making the stages in the downstream and upstream pipeline fully deterministic, i.e., the processing delay in each of the pipeline stages is known. For example, in a DSL system, the frequency domain processing stages, the time domain processing stages and the digital to analogue converter (DAC) or analogue to digital converter (ADC) in the downstream and upstream pipeline all have deterministic processing delays. This way, the upstream frequency domain processing is synchronized with the downstream frequency domain processing. Moreover, the ADC and DAC are controlled such that transmitted and received symbols are deterministically aligned.

US2007/115817A1 describes systems and methods that facilitate performing interference management techniques between sending and receiving nodes in order to provide minimum transmission rate guarantees. Carrier-to-interference ratio (C/I) may be controlled by employing specialized resource utilization messages (RUMs), the number and rate of which may be governed by a "token bucket" mechanism. For instance, a maximum token bucket size may be defined for a node, which describes the maximum amount of data that may pass through the node at a given time. A current number of tokens in the node's bucket may be evaluated and compared to a threshold value, and RUMs may be transmitted by the node as long as the current token number is greater than the predefined threshold value. Tokens may additionally be deducted from the node's bucket for successful data transmissions, thus providing a dynamic interference control mechanism.

US4569042A describes that in a voice packet switching network, following call path set-up, continuity packets are transmitted between the call originating and destination nodes to check call path continuity. The continuity packets carry time stamps of their and the preceding continuity packet's time of transmission, to permit determination of call path transit delay, and computation of asynchrony between clocks of the two nodes. A call path is considered acceptable if one half the path round trip transit delay does not exceed a predetermined maximum acceptable delay. Subsequently transmitted data packets are discarded if their transit delay exceeds the predetermined maximum acceptable delay. Transit delay of a data packet is computed from originating and terminating node clock readings at the time of transmission and reception of the packet, respectively, adjusted for asynchrony of the two clocks.

### Summary

A problem with the above solution is that the deterministic behaviour puts stringent requirements on the design of the upstream and downstream pipelines. To achieve the deterministic timing, a worst-case scenario design approach is taken such that synchronization is guaranteed at all times, leading on its turn to overdesign. Moreover, flexibility is limited because each change in functionality may lead to change in processing delays. This has the consequence that the current solution cannot support more flexible demands such as the support for multiple access technologies, support for software defined radio or the use of statistical multiplexing of processing resources instead of dedicated resource usage.

It is an object of the present invention to overcome the above shortcomings and problems and to provide a full-duplex communication solution that supports synchronized processing between downstream and upstream pipelines without the need for deterministic processing delays in each of the processing stages.

This object is achieved by aspects of the present invention which are provided in the independent claims. Preferred embodiments are provided in the dependent claims.

The present invention is defined by the appended claims and limited only by their scope.

Any embodiment/aspect (of the invention/disclosure) referred to in this description and not fully falling within the scope of said appended claims is an example useful for understanding the present invention.

More precisely,
according to a first aspect, by a full-duplex communication system is provided according to claim 1 and further detailed in the dependent claims referring back to this claim.

In the first aspect, the downstream pipeline comprises several processing stages among which the downstream processing stage and, similarly, the upstream processing pipeline also comprises several upstream processing stages among which the upstream processing stage. The upstream processing stage relies for its processing of received communication signals on information from the downstream processing stage, i.e., information on the processing of the transmit communication signals that impacted the received communication signals. Upon processing the transmit signals in the downstream processing stage, a token is generated and associated with the transmit signals. At the same time, the token is stored together with information on the transmit signals. This information may for example comprise an actual copy of the transmit signals. The transmit signals may then be further processed in further processing stages with undeterministic processing delays and/or transported over an undeterministic transport medium until they reach the transmission stage. This transmission stage is responsible for the simultaneous transmission of the transmit signals together with the reception of received signal for the upstream pipeline. At the transmission stage, the token is exchanged with the reception stage, i.e., the token is associated with received communication signals in the reception stage. The received communication signals are not necessarily the simultaneously received signals, but may also be signals that were received before or after. However, due to the synchronized operation of the transmission and reception stage, the relation between transmit signals and received signals that carry the same token is always known, i.e., is deterministic. As in the downstream pipeline, the received communication signals may then be further processed in further processing stages with undeterministic processing delays and/or transported over an undeterministic transport medium until they reach the upstream processing stage. When the received communication signal arrives at the upstream processing stage, the stage cannot directly relate the received signal to the simultaneously transmitted signal due to the undeterministic timing in the pipeline. Therefore, the token is retrieved from the received signal. Based on the token and the information on the transmit and received communication signal, the synchronization unit can then relate the received signal to the correct transmit signal, i.e., to the signal that was transmitted simultaneously with the received signal. This relationship is then provided as synchronization information to the upstream processing stage.

It is an advantage that, even if a transport medium or processing stage between the downstream processing stage and transmission stage or between the reception stage and upstream processing stage exhibit an undeterministic processing delay, the upstream processing stage can still perform synchronized processing with the downstream processing stage. Furthermore, apart from the token, there is no need for further information exchange with the other stages in the pipeline.

According to an embodiment, the downstream pipeline comprises a plurality of downstream sub-pipelines, each for downstream processing of transmit communication signals for different synchronized communication channels. Similarly, the upstream pipeline comprises a plurality of upstream sub-pipelines, each for upstream processing of received communication signals from the different synchronized communication channels.

This allows further synchronization between the processing of signals for different communication channels. This may for example be the case for vector processing of communication signals in a DSL application where the signals do not only suffer from echoing, but also from crosstalk between different channels.

According to a first further embodiment, the plurality of downstream sub-pipelines have an equal processing delay between the downstream processing stage and the transmission stage. The token generator is then further arranged to associate the token with at least one of the downstream sub-pipelines and, thereby, with at least one transmit communication signal.

In other words, while the downstream pipeline has an undeterministic processing delay, the parallel processing delays within a single downstream processing stage or transport medium may still be deterministic. In such a case, the token can be associated with a single sub-pipeline, i.e., transmit communication signals for a single communication channel, because the relation with the other sub-pipelines is known. It is therefore, an advantage that a downstream pipeline for a plurality of channels can be made deterministic by associating a token to a single channel thereby saving on transported data.

Alternatively or complimentary, the plurality of upstream sub-pipelines may have an equal processing delay between the receptions stage and the upstream processing stage. The token exchanger is then further arranged to associate the token with at least one of the upstream sub-pipelines and, thereby, with least one received communication signal. This thus allows achieving the same results for the upstream pipeline.

According to a second further embodiment the plurality of downstream sub-pipelines may have non-deterministic processing delays between the downstream processing stage and the transmission stage. The token generator is then further arranged to associate the token with each of the downstream sub-pipelines. The downstream pipeline further comprises a downstream synchronization stage arranged to synchronize the transmit communication signals from each unsynchronized downstream sub-pipeline based on the token.

In other words, the processing delays between the different sub-pipelines are also undeterministic such that, when a signal in one sub-pipeline arrives at the transmission stage, it is not deterministically related to the signals in the other stages. The token associated with each of the sub-pipelines is then used in the synchronization stage to identify the signals that are to be simultaneously transmitted, i.e., to synchronize the signals from the different sub-pipelines.

It is thus an advantage that a downstream pipeline with undeterministic sub-pipelines can be used in a full-duplex communication system.

Alternatively or complimentary the plurality of upstream sub-pipelines may have non-deterministic processing delays between the reception stage and the upstream processing stage. The token exchanger is then further arranged to associate the token with each of the unsynchronized upstream sub-pipelines and the upstream pipeline further comprises an upstream synchronization stage arranged to synchronize the received communication signals from each unsynchronized downstream sub-pipeline based on the token. This thus allows achieving the same results for the upstream pipeline as for the downstream pipeline.

Alternatively, the token exchanger may be further arranged to associate the token with only at least one of the unsynchronized upstream sub-pipelines. The upstream pipeline then further comprises an upstream synchronization stage arranged to synchronize the received communication signals from each unsynchronized downstream sub-pipeline based on the token and a channel identification field from the received communication signals.

In other words, instead of associating a token to each of the sub-pipelines to identify the interrelation and thus to perform the synchronization, information embedded in the signals is used to determine the interrelation. This information may for example be embedded by the reception stage. This has the advantage that only a single token is needed for synchronization of the sub-pipelines thereby saving on transported data.

According to an embodiment, the upstream processing stage comprises echo cancellation logic arranged to suppress an influence of transmit communication signals on received communications signals based on the information about the transmit communication signals.

According to an embodiment, the transmission stage comprises a DAC converter and the reception stage comprises an ADC converter; and wherein the DAC converter and ADC converter are synchronized.

According to an embodiment, the upstream and/or downstream processing stage comprises a vector processor for mitigating near-end (NEXT) and/or far-end cross-talk (FEXT) between the different synchronized communication channels.

According to an embodiment the full-duplex communication system further comprises:
- an computing device further comprising the downstream processing stage, the upstream processing stage, the token generator and pipeline synchronization unit; and
- a transceiver device remote from the upstream computing device further comprising the transmission stage, the reception stage and token exchanger; and
and wherein the computing device and transceiver device are further arranged to exchange the transmit and received communication signals over a non-deterministic communication link.

It is thus an advantage that a delocalized upstream and downstream pipeline is used. This way, a first part of the processing can be performed in a centralized fashion, i.e., upstream in the computing device, for example closer to the network operator or in the cloud. A second part of the processing can then be performed downstream in the transceiver device, for example closer to the user's premises. It is a further advantage that the processing that requires full-duplex synchronization can still be performed in the computing device in a non-deterministic way with respect to the transceiver device.

According to a second aspect, the disclosure relates to a method according to claim 12.

According to a third aspect, the disclosure relates to a computer program product according to claim 13.

According to a fourth aspect, the disclosure relates to a computer readable storage medium according to claim 14.

### Brief Description of the Drawings

Fig. 1 illustrates a communication system comprising a downstream and upstream pipeline for full-duplex communication according to an embodiment of the invention;
Fig. 2 illustrates a communication system comprising a downstream and upstream pipeline for full-duplex communication over a plurality of communication channels according to an embodiment of the invention; and
Fig. 3 illustrates a communication system comprising a downstream and upstream pipeline for full-duplex communication over a plurality of communication channels according to an embodiment of the invention; and
Fig. 4 illustrates a communication system comprising a downstream and upstream pipeline for full-duplex communication over a plurality of communication channels according to an embodiment of the invention; and
Fig. 5 illustrates a first computing device and a second transceiver device for full-duplex communication over a plurality of communication channels according to an embodiment of the invention.

### Detailed Description of Embodiment(s)

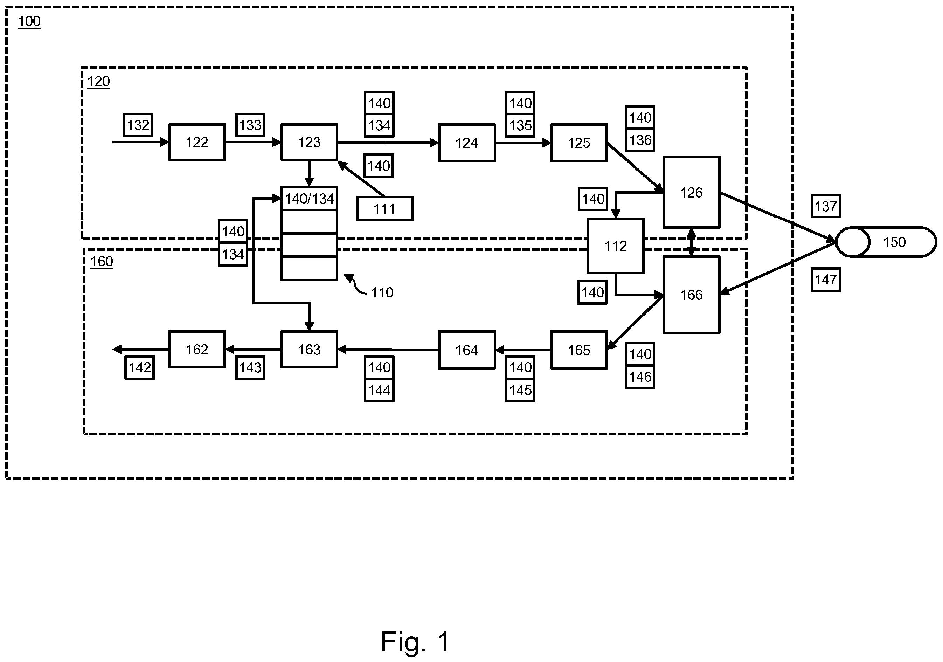

Fig. 1 illustrates a full-duplex communication system 100 according to an embodiment of the invention. System 100 comprises two processing pipelines: a downstream processing pipeline 120 for the transmission of communication signals 137 on a communication channel 150 and an upstream processing pipeline 160 for the reception of communication signals 147 from the communication channel 150. Each pipeline comprises an interconnected series of processing stages 122-126 and 166-162. A processing stage performs a data computation or transformation on input communications signals and then provides them to the next stage in the pipeline. The processing stages may further operate in a parallel time-sliced fashion.

The downstream processing pipeline further comprises a transmission stage 126 and, similarly, the upstream processing pipeline comprises a reception stage 166. The transmission stage 126 and download stage 166 operate in a synchronized fashion in order to guarantee a simultaneous transmission and reception over the shared communication medium 150.

Communication system 100 may for example correspond to a full-duplex communication system for communication over a cable plant. The communication channel 150 may then be carried over a point to multi-point coaxial transmission medium according to the full-duplex DOCSIS 3.1 specification.

In a cable application, downstream pipeline 122 takes binary payload data 132 as input into first pipeline stage 122. This stage then performs error encoding, constellation mapping, modulation and scaling resulting in frequency domain communication signals 133, e.g., binary representations of I and Q values, at the output of stage 122. The next downstream processing stage 123 performs frequency domain processing on the communication signals 133 such as for example cross-talk cancellation. At the end of processing stage 123, the frequency domain signals are converted back to time domain signals 134, also referred to as time domain symbols, for example by an inverse Fourier transform.

Downstream pipeline 120 further comprises a token generator 111. Token generator generates a unique token 140 upon the processing of a block of communication signals by downstream processing stage 123. Thereupon, the token 140 is associated with the produced output signals 134, i.e., with time domain signals 134. Communication system 100 further comprises a synchronization unit 110. The synchronization unit 110 comprises a buffer into which the generated tokens from token generator 111 are stored together with information on the communication signal 134 to which the token 140 was associated. The information may for example correspond to a copy of the generated frequency domain values in processing stage 123, or to a pointer that refers to the frequency domain values or to a symbol identification (symbol ID) that uniquely identifies the transmitted symbol.

The generated communication symbols are then further processed in the pipeline stages 124 and 125. Processing stages 124, 125 may for example correspond to a time domain processing stages arranged for insertion of a cyclic extension and the provisioning of the symbols to the transmission stage 126.

In the transmission stage 126, the communication signals 136 are prepared for transmission on the communication channel 150 and may for example comprise a digital to analogue converter (DAC) and analogue front end components to put the analogue signal 137 on the communication line. Transmission stage 126 works in a synchronous way with reception stage 166. In the reception stage, communication signals 147 are retrieved from communication channel 150 and prepared for further processing in pipeline processing stages 162-165. Reception stage 166 may for example comprise an analogue front end for receiving the communication signal 147 and an analogue to digital converter (ADC). Transmission stage 126 and reception stage 166 are operated in a synchronous mode, i.e., stage 126 and 166 are arranged for full-duplex simultaneous transmission and reception of communication signals 137 and 147 in a deterministic manner, i.e., the timing between transmitted and received signals 137 and 147 is known. For example, time domain symbols may be aligned on the DMT symbol boundaries.

Communication system 100 further comprises a token exchanger 112. The token exchanger 112 retrieves the token from a communication signal 136 received in transmission stage 126 and associates the token to a received communication signal 146 in the upstream pipeline. As stages 126 and 166 operate in a synchronous manner, also the token exchanger operates in a synchronous manner. This means that the relation between the communication signal 136 from which the token was retrieved and the communication signal 146 to which the token 140 is associated is deterministic. For example, communication signals 136 and 146 may be transmitted and received at the same time. Alternatively, the token 140 may be associated to a communication signal 146 that was received before communication signal 136 was transmitted.

Communication signal 146 then follows an opposite upstream path in the upstream pipeline 160 as in the downstream pipeline 120. For example, in a DSL upstream processing pipeline, the communication signals 146 are processed in the time domain in stages 165 and 164 to respective communication signals 145 and 144, in the frequency domain in upstream processing stage 163 to communication signals 143 and as binary payload data in processing stage 162 to payload data 142.

Upstream processing stage 163 requires synchronization with the downstream processing stage 123, i.e., information on communication signals that were transmitted simultaneously with the received signals 144 is required in order to process these signals. For example, in a DSL application, the corresponding original frequency domain values from processing stage 123 are required to perform an echo cancellation operation on the received signals in order to mitigate echo noise added to the received signals by the simultaneously transmitted signals. To this extent, processing stage 163 is also coupled to synchronization unit 110. Upon receiving communication signal 144, processing stage 163 retrieves the associating token 140. By this token, it can then retrieve the required information on the originally transmitted signals. For example, when the token 140 was exchanged between the simultaneously transmitted and received signals 137, 147, the information is stored in the synchronization unit together with the same token 140. Alternatively, when the token is associated by the token exchanger 112 with an earlier received communication signal, then the synchronization unit derives from the token and the fixed deterministic time delay introduced by the token exchanger, which information corresponds with the token. The upstream processing unit then performs the processing based on the retrieved information. The synchronization unit may then delete the stored information as it is no longer needed.

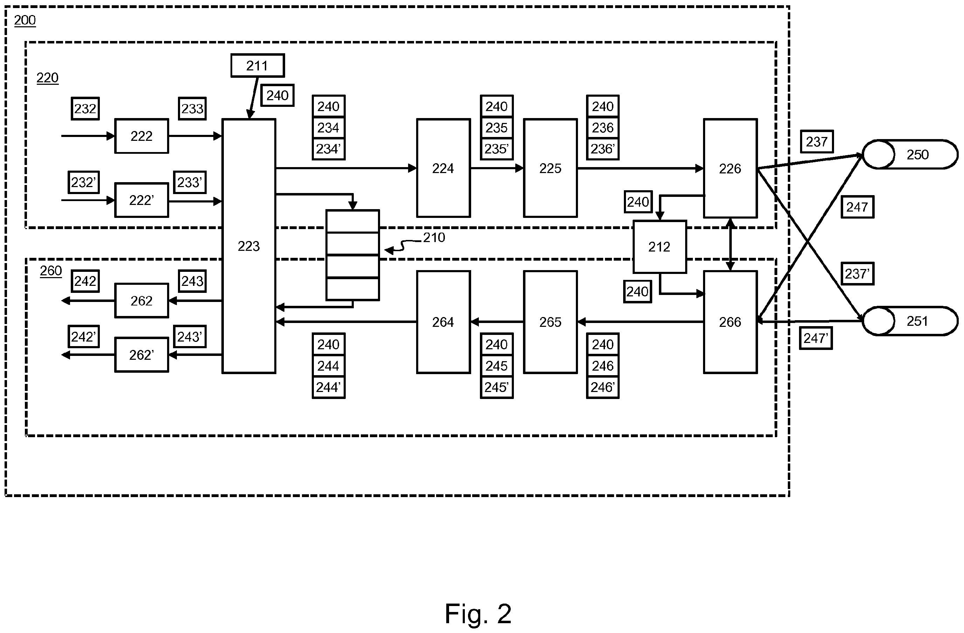

Fig. 2 illustrates a computing system 200 according to a second embodiment of the invention. Computing system 200 is similar to computing system 100, but is further configured to perform full-duplex communication over a plurality of communication channels 250, 251. To this respect, communication system is further configured to synchronize processing between upstream and downstream processing stage 223 for communication signals from all communication channels. Communication system 200 comprises a downstream pipeline 220 and upstream pipeline 260. Downstream pipeline 220 is logically divided into a plurality of sub-pipelines, wherein each sub-pipeline performs the downstream processing of communication signals for the transmission on one of the channels 250, 251. In pipeline 220, communication signals of a first sub-pipeline are 232, 233, 234, 235, 236 and transmitted as signals 237 on channel 250; communication signals in a second sub-pipeline are signals 232', 233', 234', 235', 236' and transmitted as signals 237' on channel 251. Processing stages in the downstream pipeline 220 may be independent. For example, encoding stages 222 and 222' independently process respective payload data 232 and 232'. Other processing stages may operate as a single stage for all communication signals from each sub-pipeline, e.g., processing stages 223, 224, 225 and 226 process all signals together. Similarly, upstream pipeline 260 may be logically divided into a plurality of sub-pipelines, wherein each sub-pipeline performs the upstream processing of communication signals for the reception from one of the channels 250, 251. In pipeline 260, communication signals processed in a first sub-pipeline are signals 247, 246, 245, 244, 243, 242; communication signals in a second sub-pipeline are signals 247', 246', 245', 244', 243' and 242'. Processing stages in the upstream pipeline 260 may be independent. For example, decoding stages 262 and 262' independently process respective payload data 243 and 243'. Other processing stages may operate as a single stage for all communication signals from each sub-pipeline, e.g., processing stages 223, 264, 265 and 266 process all communication signals together.

Downstream and upstream processing stage 223 may perform processing across the different sub-pipelines, such as for example vector processing to mitigate cross-talk between different communication channels 250 and 251. Downstream processing stage 223 processes a block of communication signals 233, 233' at once for the different sub-pipelines, for example corresponding to a block of time symbols that are to be transmitted simultaneously on all communication channels 250, 251 by the transmission stage 226. Upon processing such a block of signals, token generator 211, which may be similar to token generator 111, generates a token 240. This token is then associated with the produced communication signals 234, 234'.

Communication system 200 may for example correspond to a G.fast full-duplex Digital Subscriber Line (DSL) communication system wherein the communication channel 250 is carried over a twisted cupper pair. The communication systems according to the below embodiments will be further illustrated for a DSL communication system but may be applied to other full-duplex communication standards as well. In a G.fast application, downstream pipeline 220 takes binary payload data 232 and 232' as input into first pipeline stages 222 and 222'. These stages then perform error encoding, constellation mapping, modulation and scaling resulting in frequency domain communication signals 233 and 233', e.g., binary representations of I and Q values, at the output of stage 222 and 222'. The next downstream processing stage 223 performs frequency domain processing on the communication signals 233 and 233' such as for example NEXT and FEXT cross-talk cancellation. At the end of processing stage 223, the frequency domain signals are converted back to time domain signals 234 and 234', also referred to as time domain symbols, for example by an inverse Fourier transform.

In the embodiment of Fig. 2, the stages 224 and 225 are parallel processing blocks that have an equal processing delay for the processing of communication signals 235, 235' in each sub-pipeline. In other words, the sub-pipelines are synchronized with each other. Therefore, the token 240 only needs to be associated with one of the sub-pipelines, i.e., with one of the communication signals in a single sub-pipeline.

Communication system 200 comprises a transmission stage 226. Due to the block processing of stages 224, 225, the block of communication signals 234, 234' will also arrive as a block of processing signals 236, 236' together with the associated token 240. Transmission stage 226 may further be similar to transmission stage 126 but configured to perform simultaneous transmissions of signals 237, 237' over different channels 250, 251. Transmission stage 226 is further synchronized with a reception stage 266, similar to reception stage 166, that is configured to simultaneously receive communication signals 247, 247' from communication channels 250, 251. Furthermore, by the full-duplex synchronization between stages 226 and 266, the reception of signals 247, 247' is synchronized with the transmission of signals 237, 237'. Communication system 200 further comprises a token exchanger 212 for retrieving token 240 from the transmission stage 226 and associating the token with signals 246, 246' from the reception stage 266.

As stages 226 and 266 operate in a synchronous manner, also the token exchanger 212 operates in a synchronous manner. This means that the relation between the communication signals 236, 236' from which the token was retrieved and the communication signals 246, 246' to which the token 240 is associated is deterministic. For example, communication signals 236, 236' and 246, 246' may be transmitted and received at the same time. Alternatively, the token 240 may be associated to communication signals 246, 246' that were received before the block of communication signals 236, 236' were transmitted.

Communication signals 246, 246' then follow an opposite upstream path in the upstream pipeline 260 as in the downstream pipeline 220. For example, in a DSL upstream processing pipeline, the communication signals 246, 246' are processed in the time domain in stages 265 and 264 to respective communication signals 245, 245' and 244, 244', and processed in the frequency domain in upstream processing stage 223 to communication signals 243, 243' and as binary payload data in processing stage 262 to payload data 242, 242'.

Processing stages 264 and 265 process the signals in the different sub-pipelines as a single block, i.e., the processing of signals in different sub-pipelines is synchronous such that the block of signals 246, 246' results in the block of processed signals 244, 244'. Therefore, token 240 may be associated to a single sub-pipeline only, i.e., to communication signals in a single pipeline.

Upstream processing stage 223 then requires synchronization with the signals of the downstream processing stage 223, i.e., information on communication signals that were transmitted simultaneously with the received signals 244, 244' is required in order to process these signals. For example, in a DSL application, the corresponding original frequency domain values from processing stage 223 are required to perform an echo or NEXT cancellation operation on the received signals in order to mitigate echo or NEXT interference added to the received signals by the simultaneously transmitted signals. To this extent, processing stage 223 interacts with synchronization unit 210. Upon receiving communication signal 244, 244', processing stage 223 retrieves the associated token 240. By this token, it can then retrieve the required information on the originally transmitted signals. For example, when the token 240 was exchanged between the simultaneously transmitted and received signals 237, 237' and 247, 247', the information will be stored in the synchronization unit 210 together with the same token 240. Alternatively, when the token is associated by the token exchanger 212 with an earlier received communication signal, then the synchronization unit 210 derives from the token 240 and the fixed deterministic time delay introduced by the transmission stage 226 and/or the token exchanger 212, what information corresponds with the token 240. The upstream processing unit 223 then performs the processing based on the retrieved information. The synchronization unit 210 may then delete the stored information as it is no longer needed.

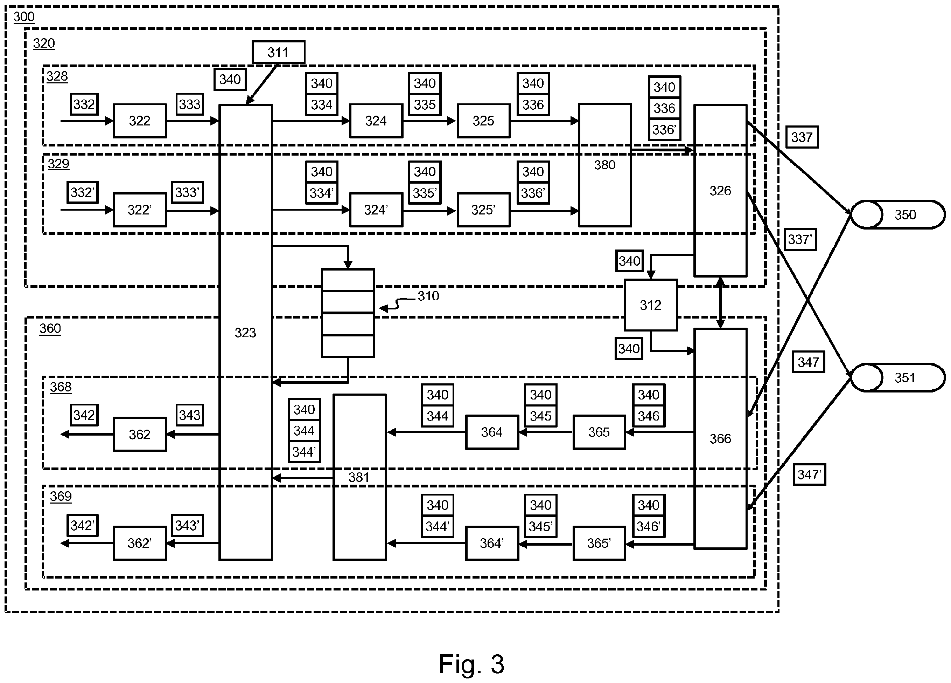

Fig. 3 illustrates a communication system 300 comprising a downstream pipeline 320 and upstream pipeline 360 for full-duplex communication over a plurality of communication channels 350, 351' according to a third embodiment of the invention. Computing system 300 is similar to computing system 200, i.e., downstream pipeline 320 is also logically dived in different sub-pipelines 328, 329 for the parallel downstream processing of the communication signals that are to be transmitted on the different channels 350, 351. Similarly, upstream pipeline 360 is logically divided in different sub-pipelines 368, 369 for the parallel upstream processing of the communication signals received from the different channels 350, 351. Processing stages 322, 322' may be similar to downstream stages 222, 222', for performing encoding and constellation mapping on signals 332, 332' thereby obtaining frequency domain signals 333, 333'. Processing stages 362, 362' may be similar to upstream stages 262, 262' for performing demapping and decoding operations on signals 343, 343' thereby obtaining binary payload data 342, 342'.

System 300 also comprises a processing stage 323 similar to stage 223 for performing downstream and upstream parallel processing on communication signals 333, 333' and 344, 344' thereby obtaining processed signals 334, 334', 343, 343' for each sub-pipeline 328, 329, 368, 369. The difference between system 200 and 300 lays in the processing stages 324, 324' and 325, 325'. These processing stages between stage 323 and transmission stage 326 process the communication signals independently for each sub-pipeline 328, 329. Consequently, processed signals 335, 336 will not be synchronized with processed signals 335', 336', i.e., the time delay of processing stages 324, 325, 324', 325' is not fixed and thus undeterministic. Because communication signals 336, 336' from different sub-pipelines 328, 329 must be transmitted simultaneously by transmission stage 326, downstream pipeline 320 comprises an additional synchronization stage 380. Furthermore, token generator 311 that may be the same as token generator 211, associates the generated token 340 to each sub-pipeline 328, 329, i.e., to communication signals 334, 334'. In synchronization stage 380, communication signals from each sub-pipeline 328, 329 with the same associated token 340 are grouped together. To do so, synchronization stage 380 may comprise a buffer for storing the signals 336, 336' from each sub-pipeline 328, 329. When synchronization stage 380 has received all signals 336, 336' from each sub-pipeline 328, it groups the signals and token 340 and forwards them to transmission stage 326. Transmission stage 326, token exchanger 312 and reception stage 366 may further operate identical as the transmission stage 226, token exchanger 212 and reception stage 266 of Fig. 2.

The upstream pipeline 360 further comprises similar processing stage 365, 365' and 364, 364' as the downstream pipeline 320. These processing stages between reception stage 366 and processing stage 323 process the received communication signals independently for each sub-pipeline 368, 369. Consequently, processed signals 345, 346 will not be synchronized with processed signals 345', 346', i.e., the time delay of processing stages 364, 365, 364', 365' is not fixed and thus undeterministic. Because communication signals 344, 344' from different sub-pipelines 368, 369 must be processed simultaneously by processing stage 323, downstream pipeline 360 comprises an additional synchronization stage 381, which operates similar to synchronization stage 380. Furthermore, token exchanger 312, associates the token 340 to each sub-pipeline 368, 369, i.e., to communication signals 346 and 346'. In synchronization stage 381, communication signals from each sub-pipeline 368, 369 with the same associated token 340 are grouped together. To do so, synchronization stage 381 may comprise a buffer for storing the signals 344, 344' from each sub-pipeline 368, 369. When synchronization stage 381 has received all signals 344, 344' from each sub-pipeline, it groups the signals and token 340 and forwards them to processing stage 323. Processing stage 323 and synchronization unit 310 may then operate identical as processing stage 223 and synchronization unit 210.

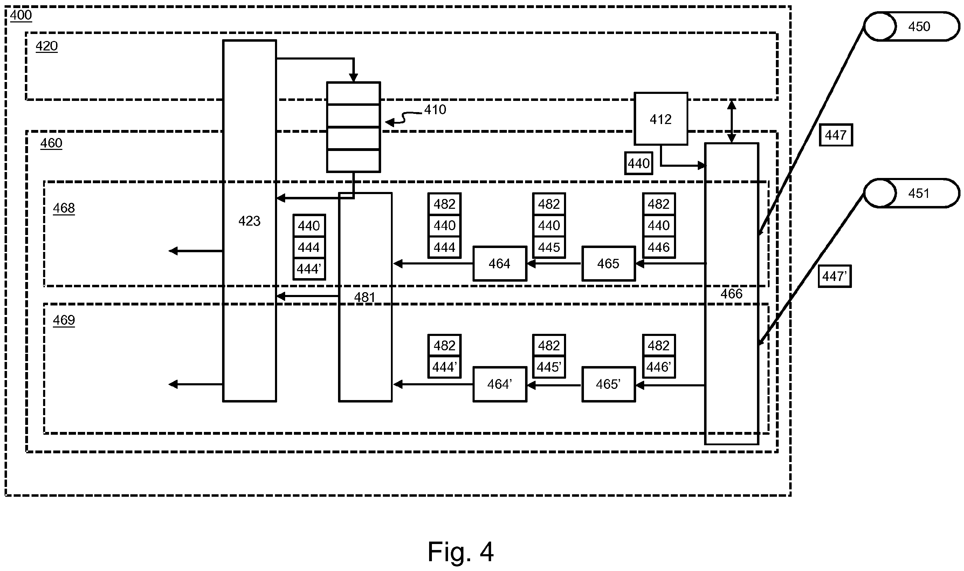

Fig. 4 illustrates a full-duplex communication system 400 for simultaneous transmission and reception of communication signals on a plurality of communication channels 450, 451 according to an embodiment of the invention. Communication system 400 comprises a downstream pipeline 420 and upstream pipeline 460. Downstream pipeline 420 may be identical to downstream pipeline 320 and, hence, exchange a token 440 by token exchanger 412 with the upstream pipeline 460 in order to synchronize the processing between downstream communication signals and upstream communication signals in processing stage 423 which may be identical to processing stage 323. The difference between system 300 and 400 is that token exchanger 412, only associates the token 440 with one sub-pipeline 468. Upstream pipeline 460 further comprises processing stages 465, 465', 464, 464' which may be identical to processing stages 365, 365', 364, 364'. By these processing stages, the communication signals 446 and 446' are processed into communication signals 445, 445' and then into communication signals 444, 444' before entering synchronization stage 481. Reception stage 466 is further arranged to generate a symbol identification 482 when receiving signals 447, 447' and to associate the symbol identification 482 to each communication signal 446, 446' that leaves the reception stage 466. The symbol identification is thus the same for each communication signal 446, 446' that was simultaneously received from channels 450, 451. Synchronization unit 481 is then arranged to group signals that carry the same symbol identification 482 together with the token 440 resulting in a block of signals 444, 444' that were all simultaneously received. Processing stage 423 and synchronization unit 410 then perform the synchronized processing of these signals similarly as processing stage 323 and synchronization unit 310.

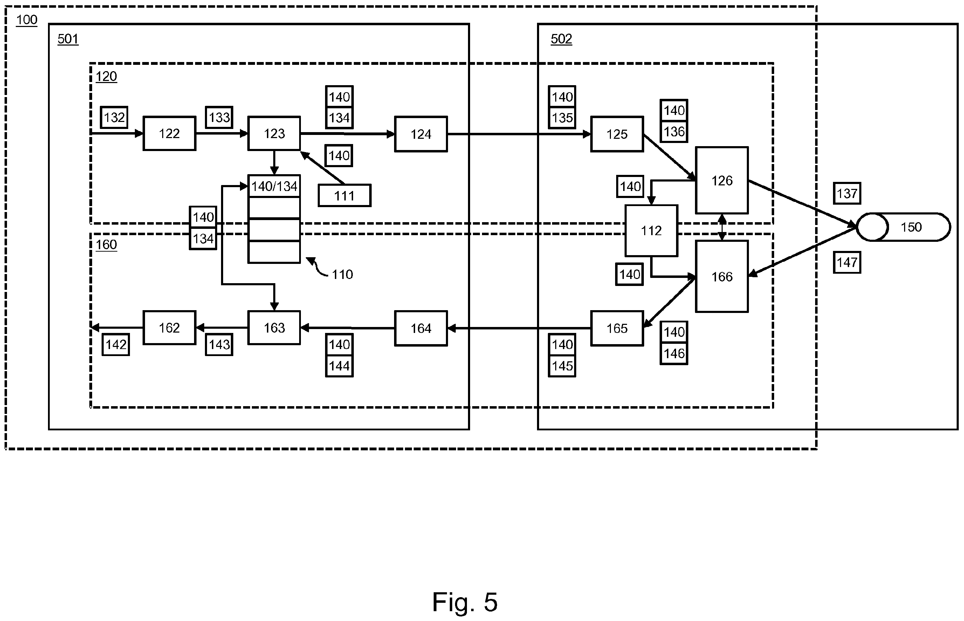

All of the above described embodiments allow undeterministic processing in between synchronized processing stages 123, 163, 223, 323, 423 and synchronized stages 126-166, 226-266, 326-366, 426-466. Therefore, processing stages 123, 163, 223, 323, 423 may be situated remote from stages 126-166, 226-266, 326-366, 426-466 wherein the communication signals are exchanged between both places over an undeterministic transportation means, such as for example an optical fibre communication network or ethernet communication network. This situation is depicted in Fig. 5 for the communication system 100 of Fig. 1. According to this embodiment, communication system 100 is further divided in a first computing device 501 and a second transceiver device 502 remote from this computing device 501. Device 501 and 502 then exchange communication signals 135, 145 as frequency domain values or time domain values together with token 140. For a DSL communication system 100, device 501 may for example be located at a network operator's premises or in the cloud. Device 502 may then be located closer to the end user's premises, for example in a cabinet in the street where it operates as a digital subscriber line access multiplexer (DSLAM).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being defined by the scope of the appended claims.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A full-duplex communication system (100, 200, 300, 400) comprising:
- a downstream pipeline (120, 220, 320, 420) comprising at least a downstream processing stage (123, 223, 323, 423) and a transmission stage (126, 226, 326); and
- an upstream pipeline (160, 260, 360, 460) comprising at least a reception stage (166, 266, 366, 466) and an upstream processing stage (163, 223, 323, 423); and wherein the transmission stage and reception stage are operable in a deterministic and synchronized manner for simultaneous transmission and reception of communication signals (137, 147, 237, 237', 247, 247', 337, 337', 347, 347', 447, 447'); and
- a token generator (111, 211, 311) arranged to generate tokens (140, 240, 340, 440) and to associate a token from said generated tokens with a transmit communication signal (134, 234, 234', 334') processed in the downstream processing stage;
- a token exchanger (112, 212, 312, 412) arranged to obtain the token, associated with the transmit communication signal, from the transmit communication signal in the transmission stage and, thereupon, to associate the token with a received communication signal (146, 246, 246', 346, 346', 446) in the reception stage; and
- a pipeline synchronisation unit (110, 210, 310, 410) arranged to:
∘ store the token and information about the associated transmit communication signal; and
∘ receive the token and information about the associated received communication signal from the upstream processing stage; and
∘ derive therefrom synchronization information about the simultaneously received and transmitted communication signals with which the token is associated and provide the synchronization information to the upstream processing stage.

2. The full-duplex communication system (200, 300, 400) according to claim 1 wherein the downstream pipeline comprises a plurality of downstream sub-pipelines (328, 329), each for downstream processing of transmit communication signals (237-237', 337-337') for different synchronized communication channels (250-251, 350-351, 450-451); and wherein the upstream pipeline comprises a plurality of upstream sub-pipelines (368, 369, 468, 469), each for upstream processing of received communication signals (247-247', 347-347', 447-447') from the different synchronized communication channels.

3. The full-duplex communication system (200) according to claim 2 wherein the plurality of downstream sub-pipelines have an equal processing delay between the downstream processing stage (223) and the transmission stage (226); and wherein the token generator (211) is further arranged to associate the token (240) with at least one of the downstream sub-pipelines and, thereby, with at least one transmit communication signal.

4. The full-duplex communication system (200) according to claim 2 wherein the plurality of upstream sub-pipelines have an equal processing delay between the receptions stage (266) and the upstream processing stage (223); and wherein the token exchanger (212) is further arranged to associate the token (240) with at least one of the upstream sub-pipelines and, thereby, with least one received communication signal.

5. The full-duplex communication system (300) according to claim 2 wherein the plurality of downstream sub-pipelines (328, 329) have non-deterministic processing delays between the downstream processing stage (323) and the transmission stage (326); and wherein the token generator (311) is further arranged to associate the token (340) with each of the downstream sub-pipelines (328, 329); and wherein the downstream pipeline (320) further comprises a downstream synchronization stage (326) arranged to synchronize the transmit communication signals (336, 336') from each unsynchronized downstream sub-pipeline (328, 329) based on the token (340).

6. The full-duplex communication system (300) according to claim 2 wherein the plurality of upstream sub-pipelines (368, 369) have non-deterministic processing delays between the reception stage (366) and the upstream processing stage (323); and wherein the token exchanger (312) is further arranged to associate the token (340) with each of the unsynchronized upstream sub-pipelines; and wherein the upstream pipeline further comprises an upstream synchronization stage (381) arranged to synchronize the received communication signals (344, 344') from each unsynchronized downstream sub-pipeline based on the token.

7. The full-duplex communication system (400) according to claim 2 wherein the plurality of upstream sub-pipelines (468, 469) have non-deterministic processing delays between the transmission stage (466) and the upstream stage (423); and wherein the token exchanger (412) is further arranged to associate the token (440) with at least one (468) of the unsynchronized upstream sub-pipelines; and wherein the upstream pipeline further comprises an upstream synchronization stage (481) arranged to synchronize the received communication signals from each unsynchronized downstream sub-pipeline based on the token (440) and a channel identification field (482) from the received communication signals.

8. The full-duplex communication system according to claim 1 wherein the upstream processing stage comprises echo cancellation logic arranged to suppress an influence of transmit communication signals on received communications signals based on the information about the transmit communication signals.

9. The full-duplex communication system according to claim 1 wherein the transmission stage comprises a digital to analogue converter, DAC, converter and the reception stage comprises an analogue to digital converter, ADC, converter; and wherein the DAC converter and ADC converter are synchronized.

10. The full-duplex communication system according to claim 2 wherein the upstream and/or downstream processing stage comprises a vector processor for mitigating near-end and/or far-end cross-talk between the different synchronized communication channels.

11. The full-duplex communication system (100) according to claim 1 comprising:
- a computing device (501) further comprising the downstream processing stage (123), the upstream processing stage (163), the token generator (111) and the pipeline synchronization unit (110); and
- a transceiver device (502) remote from the upstream computing device further comprising the transmission stage (126), the reception stage (166) and the token exchanger (112); and
wherein the computing device and transceiver device are further arranged to exchange the transmit and received communication signals over a non-deterministic communication link.

12. A method for synchronizing the processing of transmit communication signals in a downstream processing stage of a downstream pipeline (120, 220, 320, 420) of a full-duplex communication system (100,200,300,400) and received communication signals in an upstream processing stage of an upstream pipeline (160, 260, 360, 460) of the full-duplex communication system (100,200,300,400) the method comprising the following steps:
- upon processing a transmit communication signal in the downstream processing stage, generating a token and associating the token with the transmit communication signal; and
- storing the token and information about the transmit communication signal; and
- subsequently, when processing the transmit communication signal in a transmit stage of the downstream pipeline, obtaining the token from the transmit communication signal and associating the token with a received communication signal that is processed in a reception stage of the upstream pipeline; and wherein the transmission stage and reception stage are operable in a deterministic and synchronized manner for simultaneous transmission and reception of communication signals; and
- subsequently, when processing the received communication signals in the upstream processing stage, obtaining the token from the received communication signal and, by using the token and by using the stored information about the transmit communication signal deriving synchronization information about the simultaneously transmitted and received communication signals with which the token is associated; and
- processing the received communication signal in the upstream processing stage based on the synchronization information.

13. A computer program product comprising computer-executable instructions, which when executed by a computer, cause the computer to carry out the method according to claim 12.

14. A computer readable storage medium having stored thereon the computer program product according to claim 13.

## Patentansprüche

1. Vollduplexkommunikationssystem (100, 200, 300, 400), das Folgendes umfasst:
- eine stromabwärtige Pipeline (120, 220, 320, 420), die mindestens eine stromabwärtige Verarbeitungsstufe (123, 223, 323, 423) und eine Übertragungsstufe (126, 226, 326) umfasst; und
- eine stromaufwärtige Pipeline (160, 260, 360, 460), die mindestens eine Empfangsstufe (166, 266, 366, 466) und eine stromaufwärtige Verarbeitungsstufe (163, 223, 323, 423) umfasst; und wobei die Übertragungsstufe und die Empfangsstufe zum gleichzeitigen Übertragen und Empfangen von Kommunikationssignalen (137, 147, 237, 237', 247, 247', 337, 337', 347, 347', 447, 447') in einer deterministischen und synchronisierten Weise betreibbar sind; und
- einen Tokenerzeuger (111, 211, 311), der angeordnet ist, Tokens (140, 240, 340, 440) zu erzeugen und ein Token der erzeugten Tokens mit einem Übertragungskommunikationssignal (134, 234, 234', 334'), das in einer stromabwärtigen Verarbeitungsstufe verarbeitet wird, zu verknüpfen;
- einen Tokenaustauscher (112, 212, 312, 412), der angeordnet ist, das mit dem Übertragungskommunikationssignal verknüpfte Token vom Übertragungskommunikationssignal in der Übertragungsstufe zu erhalten und danach das Token mit einem empfangenen Kommunikationssignal (146, 246, 246', 346, 346', 446) in der Empfangsstufe zu verknüpfen; und
- eine Pipelinesynchronisationseinheit (110, 210, 310, 410), die zu Folgendem angeordnet ist:
∘ Speichern des Tokens und von Informationen über das verknüpfte Übertragungskommunikationssignal und
∘ Empfangen des Tokens und von Informationen über das verknüpfte empfangene Kommunikationssignal von der stromaufwärtigen Verarbeitungsstufe und
∘ Ableiten von Synchronisationsinformationen über die gleichzeitig empfangenen und übertragenen Kommunikationssignale davon, mit denen das Token verknüpft ist, und Bereitstellen der Synchronisationsinformationen für die stromaufwärtige Verarbeitungsstufe.

2. Vollduplexkommunikationssystem (200, 300, 400) nach Anspruch 1, wobei die stromabwärtige Pipeline eine Vielzahl von stromabwärtigen Unterpipelines (328, 329) umfasst, jede für die stromabwärtige Verarbeitung von Übertragungskommunikationssignalen (237-237', 337-337') für verschiedene synchronisierte Kommunikationskanäle (250-251, 350-351, 450-451); und wobei die stromaufwärtige Pipeline eine Vielzahl von stromaufwärtigen Unterpipelines (368, 369, 468, 469) umfasst, jede für die stromaufwärtige Verarbeitung von empfangenen Kommunikationssignalen (247-247', 347-347', 447-447') von den verschiedenen synchronisierten Kommunikationskanälen.

3. Vollduplexkommunikationssystem (200) nach Anspruch 2, wobei die Vielzahl von stromabwärtigen Unterpipelines eine gleiche Verarbeitungsverzögerung zwischen der stromabwärtigen Verarbeitungsstufe (223) und der Übertragungsstufe (226) aufweisen und wobei der Tokenerzeuger (211) ferner angeordnet ist, das Token (240) mit mindestens einer der stromabwärtigen Unterpipelines und dadurch mit mindestens einem Übertragungskommunikationssignal zu verknüpfen.

4. Vollduplexkommunikationssystem (200) nach Anspruch 2, wobei die Vielzahl von stromaufwärtigen Unterpipelines eine gleiche Verarbeitungsverzögerung zwischen der stromaufwärtigen Empfangsstufe (266) und der stromaufwärtigen Verarbeitungsstufe (223) aufweisen und wobei der Tokenaustauscher (212) ferner angeordnet ist, das Token (240) mit mindestens einer der stromaufwärtigen Unterpipelines und dadurch mit mindestens einem empfangenen Kommunikationssignal zu verknüpfen.

5. Vollduplexkommunikationssystem (300) nach Anspruch 2, wobei die Vielzahl von stromabwärtigen Unterpipelines (328, 329) nichtdeterministische Verarbeitungsverzögerungen zwischen der stromabwärtigen Verarbeitungsstufe (323) und der Übertragungsstufe (326) aufweisen und wobei der Tokenerzeuger (311) ferner angeordnet ist, das Token (340) mit jeder der stromabwärtigen Unterpipelines (328, 329) zu verknüpfen; und wobei die stromabwärtige Pipeline (320) ferner eine stromabwärtige Synchronisationsstufe (326) umfasst, die angeordnet ist, die Übertragungskommunikationssignale (336, 336') von jeder nicht synchronisierten stromabwärtigen Unterpipeline (328, 329) auf Basis des Tokens (340) zu synchronisieren.

6. Vollduplexkommunikationssystem (300) nach Anspruch 2, wobei die Vielzahl von stromaufwärtigen Unterpipelines (368, 369) nichtdeterministische Verarbeitungsverzögerungen zwischen der Empfangsstufe (366) und der stromaufwärtigen Verarbeitungsstufe (323) aufweisen und wobei der Tokenaustauscher (312) ferner angeordnet ist, das Token (340) mit jeder der nicht synchronisierten stromaufwärtigen Unterpipelines zu verknüpfen; und wobei die stromaufwärtige Pipeline ferner eine stromaufwärtige Synchronisationsstufe (381) umfasst, die angeordnet ist, die empfangenen Kommunikationssignale (344, 344') von jeder nicht synchronisierten stromabwärtigen Unterpipeline auf Basis des Tokens zu synchronisieren.

7. Vollduplexkommunikationssystem (400) nach Anspruch 2, wobei die Vielzahl von stromaufwärtigen Unterpipelines (468, 469) nichtdeterministische Verarbeitungsverzögerungen zwischen der Übertragungsstufe (466) und der stromaufwärtigen Stufe (423) aufweisen und wobei der Tokenaustauscher (412) ferner angeordnet ist, das Token (440) mit mindestens einer (468) der nicht synchronisierten stromaufwärtigen Unterpipelines zu verknüpfen; und wobei die stromaufwärtige Pipeline ferner eine stromaufwärtige Synchronisationsstufe (481) umfasst, die angeordnet ist, die empfangenen Kommunikationssignale von jeder nicht synchronisierten stromabwärtigen Unterpipeline auf Basis des Tokens (440) und eines Kanalidentifikationsfeldes (482) von den empfangenen Kommunikationssignalen zu synchronisieren.

8. Vollduplexkommunikationssystem nach Anspruch 1, wobei die stromaufwärtige Verarbeitungsstufe eine Echounterdrückungslogik umfasst, die angeordnet ist, einen Einfluss von Übertragungskommunikationssignalen auf empfangene Kommunikationssignale auf Basis der Informationen über die Übertragungskommunikationssignale zu dämpfen.

9. Vollduplexkommunikationssystem nach Anspruch 1, wobei die Übertragungsstufe einen Digital-Analog-Wandler, DAC, und die Empfangsstufe einen Analog-Digital-Wandler, ADC, umfasst und wobei der DAC-Wandler und der ADC-Wandler synchronisiert sind.

10. Vollduplexkommunikationssystem nach Anspruch 2, wobei die stromaufwärtige und/oder die stromabwärtige Verarbeitungsstufe einen Vektorprozessor zum Abschwächen von Nah- und/oder Fernübersprechen zwischen den verschiedenen synchronisierten Kommunikationskanälen umfasst.

11. Vollduplexkommunikationssystem (100) nach Anspruch 1, das Folgendes umfasst:
- eine Datenverarbeitungsvorrichtung (501), die ferner die stromabwärtige Verarbeitungsstufe (123), die stromaufwärtige Verarbeitungsstufe (163), den Tokenerzeuger (111) und die Pipelinesynchronisationseinheit (110) umfasst; und
- eine Sendeempfängervorrichtung (502), die von der stromaufwärtigen Datenverarbeitungsvorrichtung entfernt ist und ferner die Übertragungsstufe (126), die Empfangsstufe (166) und den Tokenaustauscher (112) umfasst; und
wobei die Datenverarbeitungsvorrichtung und die Sendeempfängervorrichtung ferner angeordnet sind, die Übertragungs- und die empfangenen Kommunikationssignale über eine nichtdeterministische Kommunikationsverbindung auszutauschen.

12. Verfahren zum Synchronisieren der Verarbeitung von Übertragungskommunikationssignalen in einer stromabwärtigen Verarbeitungsstufe einer stromabwärtigen Pipeline (120, 220, 320, 420) eines Vollduplexkommunikationssystems (100, 200, 300, 400) und empfangenen Kommunikationssignalen in einer stromaufwärtigen Verarbeitungsstufe einer stromaufwärtigen Pipeline (160, 260, 360, 460) des Vollduplexkommunikationssystems (100, 200, 300, 400);
wobei das Verfahren die folgenden Schritte umfasst:
- nach Verarbeiten eines Übertragungskommunikationssignals in der stromabwärtigen Verarbeitungsstufe Erzeugen eines Tokens und Verknüpfen des Tokens mit dem Übertragungskommunikationssignal und
- Speichern des Tokens und von Informationen über das Übertragungskommunikationssignal und
- danach, wenn das Übertragungskommunikationssignal in einer Übertragungsstufe der stromabwärtigen Pipeline verarbeitet wird, Erhalten des Tokens vom Übertragungskommunikationssignal und Verknüpfen des Tokens mit einem empfangenen Kommunikationssignal, das in einer Empfangsstufe der stromaufwärtigen Pipeline verarbeitet wird; und wobei die Übertragungsstufe und die Empfangsstufe in einer deterministischen und synchronisierten Weise zum gleichzeitigen Übertragen und Empfangen der Kommunikationssignale betreibbar sind; und
- danach, wenn die empfangenen Kommunikationssignale in der stromaufwärtigen Verarbeitungsstufe verarbeitet werden, Erhalten des Tokens vom empfangenen Kommunikationssignal und Ableiten von Synchronisationsinformationen über die gleichzeitig übertragenen und empfangenen Kommunikationssignale, mit denen das Token verknüpft ist, durch Verwenden des Tokens und durch Verwenden der gespeicherten Informationen über das Übertragungskommunikationssignal und
- Verarbeiten des empfangenen Kommunikationssignals in der stromaufwärtigen Verarbeitungsstufe auf Basis der Synchronisationsinformationen.

13. Computerprogrammprodukt, das computerausführbare Anweisungen umfasst, die, wenn sie von einem Computer ausgeführt werden, den Computer veranlassen, das Verfahren nach Anspruch 12 umzusetzen.

14. Computerlesbares Speichermedium, auf dem das Computerprogrammprodukt nach Anspruch 13 gespeichert ist.

## Revendications

1. Système de communication bilatérale simultanée (100, 200, 300, 400) qui comprend :
- un pipeline en aval (120, 220, 320, 420) qui comprend au moins un étage de traitement en aval (123, 223, 323, 423) et un étage de transmission (126, 226, 326) ; et
- un pipeline en amont (160, 260, 360, 460) qui comprend au moins un étage de réception (166, 266, 366, 466) et un étage de traitement en amont (163, 223, 323, 423) ; et dans lequel les étage de transmission et étage de réception sont utilisables d'une manière déterministe et synchronisée pour une transmission et une réception simultanées de signaux de communication (137, 147, 237, 237', 247, 247', 337, 337', 347, 347', 447, 447) ; et
un générateur de jetons (111, 211, 311) agencé pour produire des jetons (140, 240, 340, 440) et pour associer un jeton parmi lesdits jetons produits à un signal de communication de transmission (134, 234, 234', 334') traité dans l'étage de traitement en aval ;
un échangeur de jetons (112, 212, 312, 412) agencé pour obtenir le jeton associé au signal de communication de transmission, depuis le signal de communication de transmission dans l'étage de transmission et, là-dessus, pour associer le jeton à un signal de communication reçu (146, 246, 246', 346, 346', 446) dans l'étage de réception ; et
une unité de synchronisation de pipeline (110, 210, 310, 410) agencée pour :
- stocker le jeton et une information relative au signal de communication de transmission associé ; et
- recevoir le jeton et une information relative au signal de communication reçu associé depuis l'étage de traitement en amont ; et
- déduire à partir de là une information de synchronisation relative aux signaux de communication reçus et transmis simultanément auxquels le jeton est associé et fournir l'information de synchronisation dans l'étage de traitement en amont.

2. Système de communication bilatérale simultanée (200, 300, 400) selon la revendication 1, dans lequel le pipeline en aval comprend une pluralité de sous-pipelines en aval (328, 329), chacun pour un traitement en aval de signaux de communication de transmission (237-237', 337-337') pour des canaux de communication synchronisée (250-251, 350-351, 450-451) différents ; et dans lequel le pipeline en amont comprend une pluralité de sous-pipelines en amont (368, 369, 468, 469), chacun pour un traitement en amont de signaux de communication reçus (247-247', 347-347', 447-447') depuis les canaux de communication synchronisée différents.

3. Système de communication bilatérale simultanée (200) selon la revendication 2, dans lequel la pluralité de sous-pipelines en aval présentent une durée de traitement égale entre l'étage de traitement en aval (223) et l'étage de transmission (226) ; et dans lequel le générateur de jetons (211) est en outre agencé pour associer le jeton (240) à au moins l'un des sous-pipelines en aval et, ce faisant, à au moins un signal de communication de transmission.

4. Système de communication bilatérale simultanée (200) selon la revendication 2, dans lequel la pluralité de sous-pipelines en amont présentent une durée de traitement égale entre l'étage de réceptions (266) et l'étage de traitement en amont (223) ; et dans lequel l'échangeur de jetons (212) est en outre agencé pour associer le jeton (240) à au moins l'un des sous-pipelines en amont et, ce faisant, à au moins un signal de communication reçu.

5. Système de communication bilatérale simultanée (300) selon la revendication 2, dans lequel la pluralité de sous-pipelines en aval (328, 329) présentent des durées de traitement non déterministes entre l'étage de traitement en aval (323) et l'étage de transmission (326) ; et dans lequel le générateur de jetons (311) est en outre agencé pour associer le jeton (340) à chacun des sous-pipelines en aval (328, 329) ; et dans lequel le pipeline en aval (320) comprend en outre un étage de synchronisation en aval (326) agencé pour synchroniser les signaux de communication de transmission (336, 336') depuis chaque sous-pipeline en aval (328, 329) non synchronisé sur la base du jeton (340).

6. Système de communication bilatérale simultanée (300) selon la revendication 2, dans lequel la pluralité de sous-pipelines en amont (368, 369) présentent des durées de traitement non déterministes entre l'étage de réception (366) et l'étage de traitement en amont (323) ; et dans lequel l'échangeur de jetons (312) est en outre agencé pour associer le jeton (340) à chacun des sous-pipelines en amont non synchronisés ; et dans lequel le pipeline en amont comprend en outre un étage de synchronisation en amont (381) agencé pour synchroniser les signaux de communication reçus (344, 344') depuis chaque sous-pipelines en aval non synchronisé sur la base du jeton.

7. Système de communication bilatérale simultanée (400) selon la revendication 2, dans lequel la pluralité de sous-pipelines en amont (468, 469) présentent des durées de traitement non déterministes entre l'étage de transmission (466) et l'étage en amont (423) ; et dans lequel l'échangeur de jetons (412) est en outre agencé pour associer le jeton (440) à au moins l'un (468) des sous-pipelines en amont non synchronisés ; et dans lequel le pipeline en amont comprend en outre un étage de synchronisation en amont (481) agencé pour synchroniser les signaux de communication reçus depuis chaque sous-pipeline en aval non synchronisé sur la base du jeton (440) et d'un champ d'identification de canal (482) depuis les signaux de communication reçus.

8. Système de communication bilatérale simultanée selon la revendication 1, dans lequel l'étage de traitement en amont comprend une logique d'annulation d'écho agencée pour supprimer une influence de signaux de communication de transmission sur des signaux de communication reçus sur la base de l'information relative aux signaux de communication de transmission.

9. Système de communication bilatérale simultanée selon la revendication 1, dans lequel l'étage de transmission comprend un convertisseur convertisseur numérique-analogique, DAC (*digital to analogue converter*) et l'étage de réception comprend un convertisseur convertisseur analogique-numérique, ADC (*analogue to digital converter*) ; et dans lequel le convertisseur DAC et le convertisseur ADC sont synchronisés.

10. Système de communication bilatérale simultanée selon la revendication 2, dans lequel l'étage de traitement en amont et/ou en aval comprend un processeur vectoriel pour atténuer une diaphonie d'extrémité proche et/ou d'extrémité éloignée entre les canaux de communication synchronisée différents.

11. Système de communication bilatérale simultanée (100) selon la revendication 1, qui comprend :
- un dispositif informatique (501) qui comprend en outre l'étage de traitement en aval (123), l'étage de traitement en amont (163), le générateur de jetons (111) et l'unité de synchronisation de pipeline (110) ; et
- un dispositif émetteur-récepteur (502) distant du dispositif informatique en amont qui comprend en outre l'étage de transmission (126), l'étage de réception (166) et l'échangeur de jetons (112) ; et
dans lequel le dispositif informatique et le dispositif émetteur-récepteur sont en outre agencés pour échanger les signaux de communication de transmission et reçus via un lien de communication non déterministe.

12. Procédé destiné à synchroniser le traitement de signaux de communication de transmission dans un étage de traitement en aval d'un pipeline en aval (120, 220, 320, 420) d'un système de communication bilatérale simultanée (100, 200, 300, 400) et de signaux de communication reçus dans un étage de traitement en amont d'un pipeline en amont (160, 260, 360, 460) du système de communication bilatérale simultanée (100, 200, 300, 400),
le procédé comprenant les étapes suivantes consistant à :
- lors du traitement d'un signal de communication de transmission dans l'étage de traitement en aval, produire un jeton et associer le jeton au signal de communication de transmission ; et
- stocker le jeton et une information relative au signal de communication de transmission ; et
- subséquemment, lors du traitement du signal de communication de transmission dans un étage de transmission du pipeline en aval, obtenir le jeton depuis le signal de communication de transmission et associer le jeton à un signal de communication reçu qui est traité dans un étage de réception du pipeline en amont ; et dans lequel l'étage de transmission et l'étage de réception sont utilisables d'une manière déterministe et synchronisée pour une transmission et une réception simultanées de signaux de communication ; et
- subséquemment, lors du traitement de signaux de communication reçus dans l'étage de traitement en amont, obtenir le jeton depuis le signal de communication reçu et, à l'aide du jeton et à l'aide de l'information stockée relative au signal de communication de transmission, déduire une information de synchronisation relative aux signaux de communication transmis et reçus simultanément auxquels le jeton est associé ;
- traiter le signal de communication reçu dans l'étage de traitement en amont sur la base de l'information de synchronisation.

13. Produit de programme informatique qui comprend des instructions exécutables par ordinateur qui, lorsqu'exécutées par un ordinateur, amènent l'ordinateur à mettre en œuvre le procédé selon la revendication 12.

14. Support de stockage lisible par ordinateur, qui présente stocké dessus le produit de programme informatique selon la revendication 13.
